# EUROPEAN PATENT SPECIFICATION

(11) **EP 3 339 105 B1**
(45) Date of publication and mention of the grant of the patent: **14.08.2019**
(21) Application number: 17201229.6
(22) Date of filing: 13.11.2017
(51) Int. Cl.: B60R 19/48

(54) **ULTRASONIC SENSOR ASSEMBLY AND MOUNTING ASSEMBLY**
ULTRASCHALLSENSORANORDNUNG UND MONTAGEANORDNUNG
ENSEMBLE CAPTEUR À ULTRASONS ET ENSEMBLE DE MONTAGE

(30) Priority: 25.11.2016 CN 201621273910 U
(43) Date of publication of application: 27.06.2018
(73) Proprietor: Robert Bosch GmbH, 70442 Stuttgart (DE)
(72) Inventor: Xiong, Chengchu, Suzhou, Jiangsu, 215021 (CN); Pu, Bo, Suzhou, Jiangsu, 215021 (CN); XIAO, Huiqing, Suzhou, Jiangsu, 215021 (CN)

(56) References cited:
- EP-A2- 1 792 787
- US-A- 5 844 471
- US-A1- 2014 347 959
- US-B1- 6 282 969
- US-B2- 9 205 785

## Description

### FIELD

The present application relates to a mounting assembly for mounting an ultrasonic sensor in a mounting structure such as a motor vehicle's bumper.

### BACKGROUND

Usually, an ultrasonic sensor is mounted in a bumper of a motor vehicle. The ultrasonic sensor is inserted in a through hole formed in the bumper and is secured in the bumper by a sensor bracket contacting the bumper's front surface; or alternatively the ultrasonic sensor inserted in the through hole is connected to the bumper by a bracket connecting the bumper's inner surface.

In conventional designs, the sensor is secured in the bumper by snapping a protrusion provided in the sensor bracket contacting the bumper's front surface into the through hole formed in the bumper. However, because different bumpers have different thicknesses, it is required to design different mounting structures for mounting the ultrasonic sensor in the different bumpers.

US 2014/0347959 A1 discloses an ultrasonic transducer device and a method of attaching the same.

### SUMMARY

In order to solve one or more problems existing in the prior art, the present application is aimed at proposing an improved structure used for mounting an ultrasonic sensor in a mounting member, by which improved structure the ultrasonic sensor is securely connected to the mounting member and which improved structure adapts to mounting structures whose thicknesses are different.

The present application is achieved by a mounting assembly for mounting an ultrasonic sensor in a mounting member as recited in claim 1. Advantageous embodiments are set out in the dependent claims.

In one preferred embodiment, the fixation member and the shelter part are integrally formed; or alternatively, the fixation member and the shelter part are separately formed and then assembled together.

In one preferred embodiment, the fixation member comprises a cylindrical part, wherein the cylindrical part receives the ultrasonic sensor, said at least two protrusions are provided on an outer surface of the cylindrical part, and each of said at least two protrusions is provided with at least one protruding part on a surface facing the mounting member.

In one preferred embodiment, the mounting member comprises an outer side, an inner side and a through hole having an inner wall, wherein the through hole passes the outer side and the inner side, wherein the protruding part is configured such that it is able to be snapped onto the inner side of the mounting member, and wherein an oscillator of the ultrasonic sensor is exposed in front of the outer side of the mounting member.

In one preferred embodiment, the shelter part receives the oscillator of the ultrasonic sensor, and the shelter part comprises an outer portion for covering a front circumferential edge of the through hole and a ring portion for covering at least a portion of the inner wall of the through hole.

In one preferred embodiment, according to the mounting assembly as mentioned above, the mounting member is a bumper of a motor vehicle.

The structure and the fixation member for mounting the ultrasonic sensor in the mounting member as proposed by the present application are simple in configuration and can be flexibly installed. They are adapted to mounting members of different thicknesses such that the design difficulty is reduced and the production efficiency is improved.

### BRIEF DESCRIPTION OF THE DRAWINGS

For clearly illustrating the technical solutions according to the prior art or embodiments of the present application, the drawings necessarily used to describe the embodiments or the prior art are simply introduced. It appears that the drawings introduced below illustrate some of the embodiments of the present application. It is feasible for an ordinary person in the art to obtain other drawing on the basis of the attached drawings without making any inventive work.
Fig. 1 is a view illustrating a structure according to one embodiment of the present application for mounting an ultrasonic sensor in a mounting member.
Fig. 2 is an exploded view illustrating the structure shown by Fig. 1 for mounting the ultrasonic sensor assembly in the mounting member.
Fig. 3 is a top view illustrating the structure shown by Fig. 1 for mounting the ultrasonic sensor in the mounting member.
Fig. 4 is a cross-sectional view illustrating the structure for mounting the ultrasonic sensor in the mounting member, which view is obtained along a direction B of Fig. 3.
Fig. 5 is a partial enlarged and cross-sectional view illustrating how a protrusion of a fixation member shown by Fig. 4 is snapped and mounted in a through hole of the mounting member.
Fig. 6 is a side view illustrating a mounting assembly according to one embodiment of the present application for securing the ultrasonic sensor assembly.
Fig. 7 is a side view partially illustrating a protrusion of the mounting assembly for securing the ultrasonic sensor shown by Fig. 6 in an enlarged scale.

### DETAILED DESCRIPTION OF EMBODIMENTS

In order to enable the ordinary person in the art to understand the present application, preferred embodiments of the present application will be explained in combination with the attached drawings.

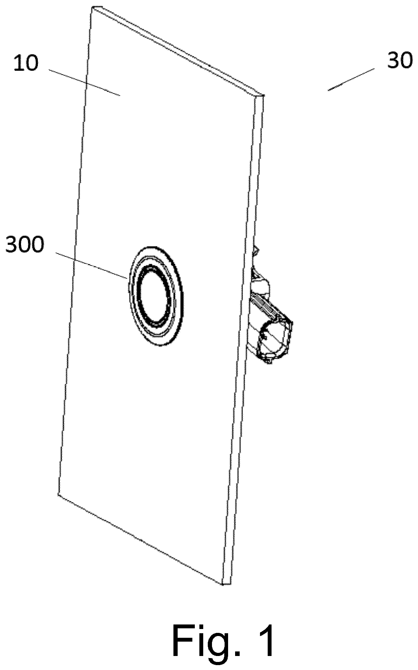

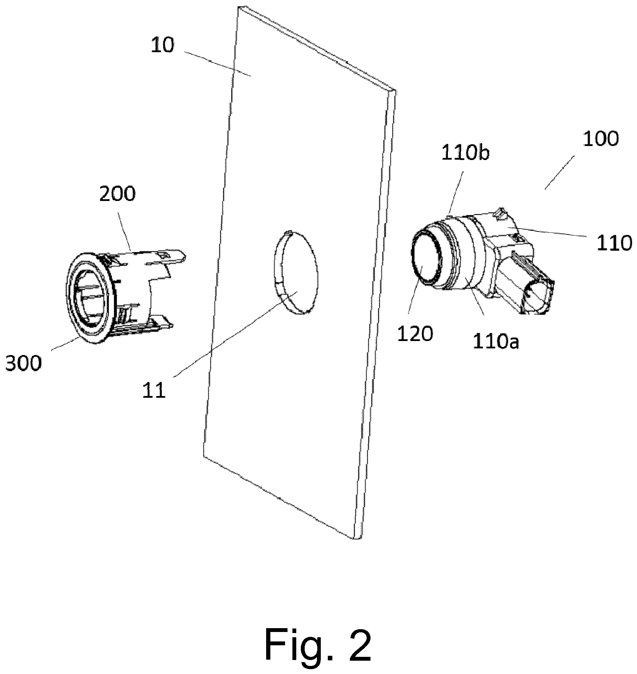

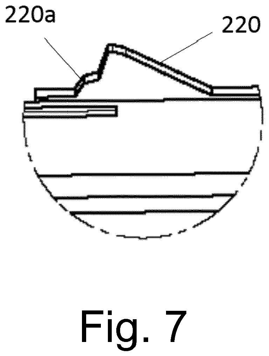

Figs. 1 to 7 disclose one preferred embodiment of the present application. As shown, in the preferred embodiment, an ultrasonic sensor 100 is mounted in a mounting member 10. The ultrasonic sensor 100 comprises an ultrasonic sensor body and a housing 110 made of a plastic material. The ultrasonic sensor 100 is mountable in a front bumper or a rear bumper of a motor vehicle as packing radar. Optionally, in the present embodiment, the mounting member 10 can be the (front or rear) bumper of the motor vehicle. The mounting member 10 comprises an outer side 10a and an inner side 10b. The ultrasonic sensor 100 also comprises an oscillator 120 for emitting ultrasonic waves forwards or rearwards relative to the motor vehicle, and for receiving echo of the waves reflecting from an obstacle object.

The mounting member 10 is preferably made of synthetic resin for example polyurethane resin. The mounting member 10 comprises a through hole 11. The ultrasonic sensor 100 is inserted in the through hole 11, and is secured in the mounting member 10 by a fixation member 200. In this way, a front surface of the oscillator 120 of the ultrasonic sensor 100 assembly can be exposed in front of the mounting member 10, i.e. in front of the outer side 10a of the mounting member 10. A shelter part 300 covers a front circumferential edge 11a of the through hole 11. Preferably, the front circumferential edge 11a is a part of the outer side 10a surrounding the through hole 11. The shelter part 300 also surrounds the oscillator 120 of the ultrasonic sensor 100 assembly held and exposed in front of the outer side 10a of the mounting member 10.

The fixation member 200 comprises a cylindrical part 210 and a protrusion 220. The fixation member 200 can be made of a material such as plastic, resin or metal. In the preferred embodiment, the fixation member 200 is made of the same material as the housing 110 of the ultrasonic sensor 100 assembly.

The ultrasonic sensor 100 is received in the cylindrical part 210 and is securely snapped and mounted in the through hole 11 of the mounting member 10 by the protrusion 210. Specifically, a front part 110a of the housing 110 is connected to the cylindrical part 210 by engagement between a groove 210a formed in an interior surface of the cylindrical part 210 and a protruding part 110b formed about the front part 110a.

The protrusion 220 is provided on an outer surface adjacent to one end of the cylindrical part 210 contacting the mounting member 10. At least two protrusions 220 are provided on the outer surface of the cylindrical part 210 in such a way that the protrusions are generally opposite to one another. Furthermore, the number of the protrusions can be changed depending on actual demands such that they are distributed circumferentially on the outer surface of the cylindrical part 210. The protrusion 220 is preferably made of an elastic material.

At least one protruding part 220a is provided on a surface of the protrusion 220 facing towards the inner side 10b of the mounting member 10. Moreover, several protruding parts 220a can be provided. These protruding parts are distributed in the form of a ladder such that their protruding extents decrease progressively in a direction towards the inner side 10b of the mounting member 10. Preferably, those protruding parts tend to be gentle in the direction towards the inner side 10b of the mounting member 10 until they gently merge into the outer surface of the cylindrical part 210.

The cylindrical part 210 is securely snapped and mounted in the through hole 11 of the mounting member 10 by any one of the protruding parts such as 220a provided on the protrusion 220. Specifically, the protruding part such as 220a of the protrusion 220 distributed circumferentially on the outer surface of the cylindrical part 210 is snapped onto the inner side 10b of the mounting member 10 and an inner wall 11b of the through hole 11. In order to adapt to mounting members 10 of different thicknesses, the protruding parts 220a having different protruding extents enable the cylindrical part 210 to be snapped onto the inner side 10b of the corresponding mounting member 10 and the inner wall 11b of the through hole 11. Therefore, the fixation member 200 is secured in the mounting member 10.

Preferably, the cylindrical part 210 also comprises a flat part 230. The flat part 230 is provided at an end of the cylindrical part 210 contacting the mounting member 10. When the cylindrical part 210 is securely snapped onto the inner side 10b of the mounting member 10 and the inner wall 11b of the through hole 11, the flat part 230 extends in the through hole 11. The flat part 230 is coupled to the inner wall 11b of the through hole 11 for example by an adhesive agent such that the ultrasonic sensor 100 assembly can be optimally secured in the mounting member 10.

Refer to the shelter part 300 as shown. The shelter part 300 comprises an outer portion 310 for covering the front circumferential edge 11a of the through hole 11 and a ring portion 320 for covering at least a portion of the inner wall 11b of the through hole 11. The shelter part 300 can be made of resin, metal, rubber or any other suitable materials. In the preferred embodiment, the shelter part 300 is made of a plastic material which is the same as the housing 110 and the fixation member 200.

The shelter part 300 is a member used to cover the outer circumferential edge 11a of the through hole 11 and the inner wall 11b of the through hole 11. Therefore, its mechanical strength and size need not to be very great. The outer portion 310 has a width (the annular width outside of the ring portion 320) is in a range between 1 and 3 mm. The ring portion 310 has a length of less than 1 mm. In the present preferred embodiment, the width of the outer portion 310 is 1.5 mm, and the length of the ring portion 320 is 0.5 mm.

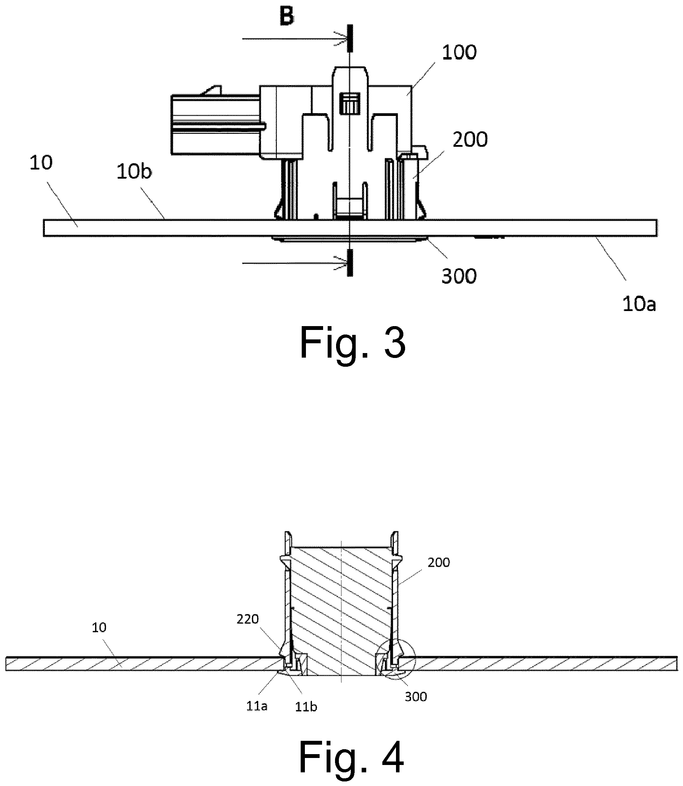

As shown in Fig. 4, the shelter part 300 is provided such that it covers the front circumferential edge 11a of the through hole 11 and a portion of the inner wall 11b of the through hole 11. When it is intended to form the through hole 11 in the bumper 10 after it is painted, a tool such as a hole saw is used to form the through hole 11. Therefore, the inner wall 11b has a rough surface, which facilitates to securely holding the shelter part 300 between the inner wall 11b and the front part 110a of the housing 110 such as the oscillator 110a. Preferably, the outer surface of the cylindrical part 210 contacting the inner wall 11b can be made rough.

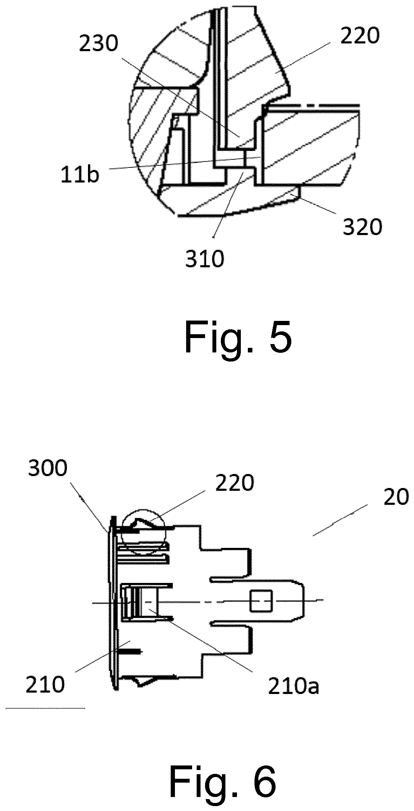

The fixation member 200 and the shelter part 300 can be integrally formed to generate a mounting assembly 20 as shown in Fig. 6. Alternatively, they can be separated from each other and then assembled together. The mounting assembly 20 and the ultrasonic sensor 100 are mounted in the mounting member 10 to generate an ultrasonic sensor assembly 30 as shown in Fig. 1.

The ultrasonic sensor 100 can be mounted in the mounting member 10 in the following manner. For example, the through hole 11 is formed in the mounting member 10 (such as the front or rear bumper of the motor vehicle) by the through hole saw. The fixation member 200 is secured in the through hole 11 in place by snapping the protrusion 220 onto the inner side 10b of the mounting member 10. Then, using the adhesive agent, the flat part 230 of the fixation member 200 is coupled to the inner wall 11b of the through hole 11. Afterwards, the shelter part 300 is secured in place so as to cover the front circumferential edge 11a of the through hole 11 and the inner wall 11b of the through hole 11. Alternatively, the shelter part 300 and the fixation member 200 can be secured in a reversed order. Then, the front part 110a of the ultrasonic sensor 100 is inserted in the cylindrical part 210 of the fixation member 200. Because the groove formed in the cylindrical part 210 will engage the protruding part formed in the front part 110a, the front part 110a of the ultrasonic sensor 100 will be naturally connected to the cylindrical part 210. In this way, the ultrasonic sensor 100 can be mounted in the mounting member 10.

The above-mentioned preferred embodiments are advantageous in that: the protruding parts provided on the protrusion 220 in the form of a ladder are adaptable to snap the fixation member 200 into mounting members 10 of different thicknesses. The shelter part 300 for covering the front circumferential edge 11a of the through hole 11 and the fixation member 200 are separately formed such that the shelter part 300 can be formed smaller and thinner than the protrusion of a conventional fixation member.

The present application is not limited to those already explained embodiments. They can be variously modified or altered. For instance, the ultrasonic sensor 100 can be mounted in a mounting member other than the front or rear bumper of the motor vehicle. For instance, when the ultrasonic sensor assembly 30 is generated, the mounting assembly 20 as a whole can be directly pressed into the through hole 11 from the outer side 10a of the mounting member 10. The contents already mentioned only relate to the preferred embodiments of the present application and cannot be deemed to limit the present application.

## Claims

1. A mounting assembly (20) for mounting an ultrasonic sensor (100) in a mounting member (10), comprising: a fixation member (200) for receiving said ultrasonic sensor (100); and a shelter part (300) disposed in front of the fixation member (200), the fixation member (200) is provided with at least two protrusions (220) on its outer surface adjacent to the shelter part (300); each of said at least two protrusions (220) is provided with at least one protruding part (220a); and the protruding part (220a) is configured such that it is able to be snapped onto the mounting member (10);
**characterized in that**
each of said at least two protrusions (220) is provided with several protruding parts (220a) which are distributed in the form of a ladder such that their protruding extents decrease progressively in a direction towards an inner side (10b) of the mounting member (10) adaptable to snap the fixation member (200) into mounting members (10) of different thicknesses.

2. The mounting assembly (20) as recited in claim 1, **characterized in that** the fixation member (200) and the shelter part (300) are integrally formed; or alternatively, the fixation member (200) and the shelter part (300) are separately formed and then assembled together.

3. The mounting assembly (20) as recited in claim 2, **characterized in that** the fixation member (200) comprises a cylindrical part (210), wherein the cylindrical part (210) receives the ultrasonic sensor (100), said at least two protrusions (220) are provided on an outer surface of the cylindrical part (210), and each of said at least two protrusions (220) is provided with the protruding parts (220a) on a surface facing the mounting member (10).

4. The mounting assembly (20) as recited in claim 3, **characterized in that** the mounting member (10) comprises an outer side (10a), an inner side (10b) and a through hole (11) having an inner wall (11b), wherein the through hole (11) passes the outer side (10a) and the inner side (10b), wherein the protruding part (220a) is configured such that it is able to be snapped onto the inner side (10a) of the mounting member (10), and wherein an oscillator (120) of the ultrasonic sensor (100) is exposed in front of the outer side (10a) of the mounting member (10).

5. The mounting assembly (20) as recited in claim 4, **characterized in that** the shelter part (300) is arranged to receive the oscillator (120) of the ultrasonic sensor (100), and the shelter part (300) comprises an outer portion (310) for covering a front circumferential edge (11a) of the through hole (11) and a ring portion (320) for covering at least a portion of the inner wall (11b) of the through hole (11).

6. The mounting assembly (20) as recited in any one of claims 1 to 5, **characterized in that** the mounting member (10) is a bumper of a motor vehicle.

## Patentansprüche

1. Montageanordnung (20) für die Montage eines Ultraschallsensors (100) in einem Montageelement (10), Folgendes umfassend: ein Befestigungselement (200) zur Aufnahme des Ultraschallsensors (100); und ein Gehäuseteil (300), das vor dem Befestigungselement (200) angeordnet ist, wobei das Befestigungselement (200) mit mindestens zwei Vorsprüngen (220) auf seiner Außenfläche, an das Gehäuseteil (300) angrenzend versehen ist; wobei jeder der mindestens zwei Vorsprünge (220) mit mindestens einem Vorsprungteil (220a) versehen ist; und das Vorsprungteil (220a) so ausgelegt ist, dass es auf dem Montageelement (10) eingerastet werden kann;
**dadurch gekennzeichnet, dass**
jeder der mindestens zwei Vorsprünge (220) mit mehreren Vorsprungteilen (220a) versehen ist, die in Form einer Leiter verteilt sind, sodass ihre vorstehenden Ausdehnungen stetig in Richtung Innenseite (10b) des Montageelements (10) abnehmen, und dazu eingerichtet werden kann, das Befestigungselement (200) in Montageelemente (10) mit unterschiedlichen Stärken einzurasten.

2. Montageanordnung (20) nach Anspruch 1, **dadurch gekennzeichnet, dass** das Befestigungselement (200) und das Gehäuseteil (300) einstückig ausgebildet sind; oder alternativ, dass das Befestigungselement (200) und das Gehäuseteil (300) getrennt ausgebildet sind und dann zusammengebaut wurden.

3. Montageanordnung (20) nach Anspruch 2, **dadurch gekennzeichnet, dass** das Befestigungselement (200) ein zylindrisches Teil (210) umfasst, wobei das zylindrische Teil (210) den Ultraschallsensor (100) aufnimmt, die mindestens zwei Vorsprünge (220) auf einer Außenfläche des zylindrischen Teils (210) bereitgestellt sind und jeder der mindestens zwei Vorsprünge (220) auf einer dem Montageelement (10) zugewandten Fläche mit den Vorsprungteilen (220a) versehen ist.

4. Montageanordnung (20) nach Anspruch 3, **dadurch gekennzeichnet, dass** das Montageelement (10) eine Außenseite (10a), eine Innenseite (10b) und eine Durchgangsbohrung (11) mit einer Innenwand (11b) umfasst, wobei die Durchgangsbohrung (11) durch die Außenseite (10a) und die Innenseite (10b) verläuft, wobei das Vorsprungteil (220a) so ausgelegt ist, dass es auf der Innenseite (10a) des Montageelements (10) eingerastet werden kann, und wobei ein Oszillator (120) des Ultraschallsensors (100) vor der Außenseite (10a) des Montageelements (10) freigelegt ist.

5. Montageanordnung (20) nach Anspruch 4, **dadurch gekennzeichnet, dass** das Gehäuseteil (300) dazu angeordnet ist, den Oszillator (120) des Ultraschallsensors (100) aufzunehmen, und das Gehäuseteil (300) einen Außenabschnitt (310), um eine vordere Umfangskante (11a) der Durchgangsbohrung (11) abzudecken, und einen Ringabschnitt (320), um zumindest einen Teil der Innenwand (11b) der Durchgangsbohrung (11) abzudecken, umfasst.

6. Montageanordnung (20) nach einem der Ansprüche 1 bis 5, **dadurch gekennzeichnet, dass** das Montageelement (10) ein Stoßfänger eines Kraftfahrzeugs ist.

## Revendications

1. Ensemble de montage (20) pour monter un capteur à ultrasons (100) dans un élément de montage (10), comprenant: un élément de fixation (200) destiné à recevoir ledit capteur à ultrasons (100); et une partie d'abri (300) disposée devant l'élément de fixation (200), l'élément de fixation (200) est pourvu d'au moins deux saillies (220) sur sa surface extérieure adjacente à la partie d'abri (300); chacune desdites au moins deux saillies (220) est munie d'au moins une partie saillante (220a); et la partie saillante (220a) est configurée pour pouvoir être fixée sur l'élément de montage (10);
**caractérisé en ce que**
chacune desdites au moins deux saillies (220) est munie de plusieurs parties saillantes (220a) qui sont réparties en arc sous la forme d'une échelle de telle sorte que leurs extensions saillantes diminuent progressivement dans une direction vers un côté intérieur (10b) de l'élément de montage (10) adaptable pour encliqueter l'élément de fixation (200) en éléments de montage (10) d'épaisseurs différentes.

2. Ensemble de montage (20) selon la revendication 1, **caractérisé en ce que** l'élément de fixation (200) et la partie d'abri (300) sont formés d'un seul tenant; ou bien l'élément de fixation (200) et la partie d'abri (300) sont formés séparément et ensuite assemblés.

3. Ensemble de montage (20) selon la revendication 2, **caractérisé en ce que** l'élément de fixation (200) comprend une partie cylindrique (210), dans lequel la partie cylindrique (210) reçoit le capteur à ultrasons (100), lesdites au moins deux saillies (220) sont prévues sur une surface extérieure de la partie cylindrique (210), et chacune desdites au moins deux saillies (220) est prévue avec les parties saillantes (220a) sur une surface orientée vers l'élément de montage (10).

4. Ensemble de montage (20) selon la revendication 3, **caractérisé en ce que** l'élément de montage (10) comprend un côté extérieur (10a), un côté intérieur (10b) et un trou traversant (11) ayant une paroi intérieure (11b), le trou traversant (11) traversant le côté extérieur (10a) et le côté intérieur (10b), la partie saillante (220a) étant configurée de manière à pouvoir être encliquetée sur le côté intérieur (10a) de l'élément de montage (10), et un oscillateur (120) du capteur à ultrasons (100) étant exposé devant le côté extérieur (10a) de l'élément de montage (10).

5. Ensemble de montage (20) selon la revendication 4, **caractérisé en ce que** la partie d'abri (300) est agencée pour recevoir l'oscillateur (120) du capteur à ultrasons (100), et la partie d'abri (300) comprend une partie extérieure (310) pour couvrir un bord périphérique avant (11a) du trou traversant (11) et une partie annulaire (320) pour couvrir au moins une portion de la paroi intérieure (11b) du trou traversant (11).

6. Ensemble de montage (20) selon l'une quelconque des revendications 1 à 5, **caractérisé en ce que** l'élément de montage (10) est un pare-chocs d'un véhicule automobile.
